# EUROPÄISCHE PATENTSCHRIFT

(11) **EP 2 918 776 B1**
(45) Veröffentlichungstag und Bekanntmachung des Hinweises auf die Patenterteilung: **13.07.2016**
(21) Anmeldenummer: 15157417.5
(22) Anmeldetag: 03.03.2015
(51) Int. Cl.: F01D 5/14, F01D 9/04

(54) **VERFAHREN ZUR HERSTELLUNG EINES DOPPELREIHIGEN SCHAUFELRADS FÜR EINE STRÖMUNGSMASCHINE UND DOPPELREIHIGES SCHAUFELRAD**
METHOD OF MANUFACTURING A DOUBLE-ROW BLADE WHEEL FOR A FLOW ENGINE AND DOUBLE-ROW BLADE WHEEL
PROCÉDÉ DE FABRICATION D'UNE ROUE À AUBES À DEUX RANGÉES POUR UNE TURBOMACHINE ET ROUES À AUBES À DEUX RANGÉES

(30) Priorität: 10.03.2014 DE 102014204346
(43) Veröffentlichungstag der Anmeldung: 16.09.2015
(73) Patentinhaber: Rolls-Royce Deutschland Ltd & Co KG, 15827 Blankenfelde-Mahlow (DE)
(72) Erfinder: JOHANN, Erik, 10623 Berlin (DE); ORTMANNS, Jens, 14548 Schwielowsee (DE)
(74) Vertreter: Maikowski & Ninnemann Patentanwälte Partnerschaft mbB

(56) Entgegenhaltungen:
- EP-A1- 2 626 514
- EP-A2- 2 261 463
- DE-A1-102007 035 726

## Beschreibung

Die Erfindung betrifft ein Verfahren zur Herstellung eines doppelreihigen Schaufelrads für eine Strömungsmaschine und ein doppelreihiges Schaufelrad.

Es ist bekannt, in einer Strömungsmaschine doppelreihige Schaufelräder einzusetzen, die auch als Tandem-Schaufelräder bezeichnet werden. Aus der EP 2 261 463 A2 ist eine Strömungsmaschine mit einem doppelreihigen Statorschaufelrad bekannt, das aus zwei direkt benachbarten feststehenden Statorschaufelreihen besteht. Ein doppelreihiges Schaufelrad ist beispielsweise auch aus der EP 2 626 514 A1 bekannt.

Bei einem doppelreihigen Schaufelrad ist sicherzustellen, dass der Versatz in Umfangsrichtung zwischen den Schaufeln der beiden Gitterreihen des doppelreihigen Schaufelrads exakt eingestellt ist. Dieser Versatz in Umfangsrichtung bzw. dessen Bereitstellung wird bei einem Leitschaufelrad auch als Umfangspositionierung (englisch: "Clocking") bezeichnet.

Im Vergleich zu Schaufelrädern mit nur einer Gitterreihe erfordert ein doppelreihiges Schaufelrad somit einen erheblichen Bauaufwand, da die zwei Gitterreihen sehr genau zueinander positioniert werden müssen, um einen aerodynamischen Vorteil gegenüber einer einreihigen Ausbildung der Schaufelräder zu erreichen. Dies führt dazu, dass doppelreihige Schaufelräder nur bei speziellen aerodynamischen Aufgaben Verwendung finden und bisher nicht weit verbreitet sind.

Der vorliegenden Erfindung liegt die Aufgabe zugrunde, ein Verfahren zur Herstellung eines doppelreihigen Schaufelrads bereitzustellen, das eine vereinfachte Herstellung eines solchen Schaufelrades ermöglicht. Des Weiteren soll ein entsprechend vereinfachtes doppelreihiges Schaufelrad bereitgestellt werden.

Diese Aufgabe wird erfindungsgemäß durch ein Verfahren mit den Merkmalen des Anspruchs 1 und ein doppelreihiges Schaufelrad mit den Merkmalen des Anspruchs 7 gelöst. Ausgestaltungen der Erfindung sind in den Unteransprüchen angegeben.

Danach sieht die erfindungsgemäße Lösung vor, dass die erste Gitterreihe und die zweite Gitterreihe unabhängig voneinander hergestellt werden und nach ihrer gesonderten Herstellung miteinander verbunden werden. Des Weiteren kann vorgesehen sein, dass eine der beiden Gitterreihen oder beide Gitterreihen aus einer Mehrzahl von Segmenten bestehen, die jeweils eine Gitterreihe bilden. Auch für diesen Fall werden die jeweiligen Segmente und Gitterreihen unabhängig voneinander hergestellt und erst anschließend, das heißt nach der getrennten Herstellung, miteinander oder mit einer der Gitterreihen verbunden.

Das Merkmal, das die zweite Gitterreihe oder Segmente der zweiten Gitterreihe unabhängig von der ersten Gitterreihe oder Segmenten der ersten Gitterreihe hergestellt werden, ist dahingehend zu verstehen, dass die beiden Gitterreihen oder deren Segmente nicht von vornherein als ein Teil hergestellt werden, sondern aus Einzelteilen bestehen, die dann miteinander verbunden werden. Dabei ist nicht ausgeschlossen, dass die beiden Gitterreihen und die einzelnen Segmente in einem gemeinsamen Prozess, beispielsweise einem Gießverfahren hergestellt werden, aber eben als getrennte Bauteile. Auch kann vorgesehen sein, dass Segmente einer Gitterreihe durch Unterteilen einer als Vollring ausgebildeten Gitterreihe hergestellt werden.

Die erfindungsgemäße Lösung macht sich die Erkenntnis zunutze, dass Toleranzen, die die unabhängig voneinander hergestellte Gitterreihen oder Gitterreihensegmente aufweisen, mit der Toleranz der jeweils anderen Gitterreihe bzw. den anderen Gitterreihensegmenten ausgeglichen werden können. So ist vorgesehen, dass das Verbinden der Gitterreihen und/oder der Segmente der Gitterreihen in einer Position erfolgt, bei der eine gewünschte Relativposition in Umfangsrichtung zwischen den ersten Schaufeln der ersten Gitterreihe und der zweiten Schaufeln der zweiten Gitterreihe vorliegt.

Die erfindungsgemäße Lösung der Herstellung der beiden Gitterreihen unabhängig voneinander ermöglicht somit, durch Einstellung der Relativposition in Umfangsrichtung der beiden Gitterreihen oder von Segmenten der beiden Gitterreihen vor deren Verbindung die Toleranz im Hinblick auf die gewünschte Relativposition der Schaufeln der beiden Gitterreihen ("Clocking") zu minimieren.

Es ist vorgesehen, dass das Herstellen der ersten Gitterreihe das Herstellen eines ringförmigen Trägers umfasst, an dem eine Mehrzahl der ersten Schaufeln angeordnet ist. Ebenso umfasst das Herstellen der zweiten Gitterreihe das Herstellen eines zweiten ringförmigen Trägers, an dem eine Mehrzahl der zweiten Schaufeln angeordnet ist.

Es ist weiter vorgesehen, dass der erste ringförmige Träger und/oder der zweite ringförmige Träger nicht als Vollring, sondern aus einer Mehrzahl von Kreissegmenten gebildet werden. Insbesondere sieht eine vorteilhafte Ausgestaltung vor, dass eine der beiden Träger als Vollring und der andere der beiden Träger durch Kreissegmente gebildet wird, wobei die Kreissegmente sukzessive mit dem Vollring verbunden werden, beispielsweise durch Schweißen und/oder formschlüssige Verbindungen.

Hierzu kann vorgesehen sein, dass ein erstes Kreissegment der einen Gitterreihe mit dem Vollring der anderen Gitterreihe verbunden wird, wobei eine gewünschte Relativposition in Umfangsrichtung zwischen Schaufeln des ersten Kreissegments und Schaufeln des Vollrings eingestellt wird. Da ein solches Kreissegment im Vergleich zu dem Vollring eine geringere Anzahl von Schaufeln aufweist, kann eine Positionierung der Schaufeln des Kreissegments zu den Schaufeln des Vollrings der anderen Gitterreihe mit sehr hoher Genauigkeit erfolgen, das heißt, es kann ein gewünschter Versatz ("clocking") mit hoher Genauigkeit eingestellt werden, obwohl das Kreissegment und der Vollring mit Toleranzen versehen sind. Durch dieses Vorgehen können die Toleranzen der Bauteile ausgeglichen werden.

Anschließend wird ein weiteres Kreissegment mit dem Vollring verbunden. Dies erfolgt ebenfalls unter Einstellung einer gewünschten Relativposition in Umfangsrichtung zwischen den Schaufeln des Kreissegments und den Schaufeln des Vollrings. Auf diese Weise wird sukzessive die eine Schaufelreihe, die in Segmenten vorliegt, mit der anderen Schaufelreihe, die als Vollring vorliegt, verbunden, wobei vor jeder Verbindung das entsprechende Segment einzeln zur Bereitstellung eines gewünschten Versatzes der Schaufeln der beiden Gitterreihen positioniert wird.

Gemäß einer Ausgestaltung der Erfindung ist vorgesehen, dass die erste Gitterreihe und/oder die zweite Gitterreihe und/oder Segmente derselben jeweils durch ein Metallgussverfahren, ein Metall-Spritzgießverfahren (MIM-Verfahren (MIM = "Metal Injection Molding")), durch Schmieden und/oder durch Fräsen hergestellt und danach miteinander verbunden werden. Insbesondere kann vorgesehen sein, dass der Träger und die an dem Träger angeordneten Schaufeln einer Gitterreihe mittels eines Metallgussverfahrens, eines Metall-Spritzgießverfahrens, durch Schmieden und/oder Fräsen als Vollring oder als Segmente hergestellt werden. Auch können die Segmente durch Separieren einer zunächst als Vollring hergestellten Gitterreihe bereitgestellt werden.

Alternativ kann vorgesehen sein, dass nur die Träger der Gitterreihen oder Segmente der Träger durch ein Metallgussverfahren, ein Metall-Spritzgussverfahren, Schmieden und/oder Fräsen hergestellt werden, wobei mit dem Träger danach in anderer Weise hergestellte Schaufeln verbunden werden.

Als Träger einer Gitterreihe wird jede Struktur verstanden, die geeignet ist, Leitschaufeln oder Laufschaufeln eines Stators oder eines Rotors zu tragen. Hierbei kann es sich um ein ringförmiges Außendeckband und/oder ein ringförmiges Innendeckband handeln, die zusammen mit den Schaufeln zu einem integralen Bauteil montiert oder in einem Stück gegossen sind. Es kann sich bei einem Träger jedoch beispielsweise auch um eine Scheibe oder Elemente des Gehäuses und/oder der Nabe einer Gasturbine handeln.

Gemäß einer weiteren Ausgestaltung der Erfindung ist vorgesehen, dass das Verbinden der Gitterreihen und/oder der Segmente der Gitterreihen in einer Position erfolgt, in der der relative Abstand in Umfangsrichtung zwischen den Schaufeln der ersten Gitterreihe und den jeweils benachbarten Schaufeln der zweiten Gitterreihe derart bemessen ist, dass er in einem Toleranzbereich der Positionierung liegt, der bei Werten des relativen Abstands zwischen etwa 80 % und 95 % liegt. Hierdurch wird erreicht, dass der Wirkungsgrad der Stufe nicht beeinträchtigt wird, selbst wenn trotz der hochgenauen relativen Positionierung der jeweiligen Schaufeln zueinander - erreicht durch das beschriebene Herstellungsverfahren - noch geringe Toleranzen verbleiben.

Das mit dem erfindungsgemäßen Verfahren hergestellte doppelreihige Schaufelrad kann grundsätzlich ein Laufrad oder ein Leitrad eines Verdichters oder einer Turbine sein. Gemäß einer Ausgestaltung findet das erfindungsgemäße doppelreihige Schaufelrad Verwendung als Leitrad eines Verdichters, insbesondere als Ausgangsleitrad (OGV) eines Verdichters (OGV = "Outlet Guide Vane").

Die vorliegende Erfindung betrifft auch ein doppelreihiges Schaufelrad für eine Strömungsmaschine, das eine erste Gitterreihe und eine zweite Gitterreihe aufweist, die in Strömungsrichtung eines Gases, das die Gitterreihen durchströmt, aneinander angrenzend angeordnet sind. Die erste Gitterreihe und die zweite Gitterreihe sind unabhängig voneinander hergestellt worden und/oder umfassen unabhängig voneinander hergestellte Segmente. Dabei sind zur Bildung des doppelreihigen Leitrads die erste Gitterreihe und die zweite Gitterreihe miteinander verbunden oder sind Segmente der ersten Gitterreihe und/oder Segmente der zweiten Gitterreihe untereinander oder mit einer der Gitterreihen verbunden. Die miteinander verbundenen Gitterreihen und Segmente sind dabei irreversibel und drehfest miteinander verbunden, so dass sie nach der Verbindung ein Teil bilden.

Weiter ist vorgesehen, dass die erste Gitterreihe einen ersten ringförmigen Träger aufweist, an dem eine Mehrzahl der ersten Schaufeln angeordnet ist, und die zweite Gitterreihe einen zweiten ringförmigen Träger aufweist, an dem die Mehrzahl der zweiten Schaufeln angeordnet ist. Eine der beiden Träger ist dabei als Vollring und der andere der beiden Träger durch Kreissegmente gebildet ist, wobei die Kreissegmente jeweils mit dem Vollring verbunden sind.

Das Herstellungsverfahren zeigt sich an dem fertig montierten doppelreihigen Schaufelrad durch die bleibende Existenz entsprechender Verbindungsmittel, wie beispielsweise der Existenz von Schweißnähten und/oder von formschlüssigen Verbindungen zur Verbindung der beiden Gitterreihen oder von Segmente der Gitterreihen.

Die Erfindung wird nachfolgend unter Bezugnahme auf die Figuren der Zeichnung anhand eines Ausführungsbeispiels näher erläutert. Es zeigen:
- Fig. 1: eine perspektivische Ansicht eines Ausführungsbeispiels eines doppelreihigen Schaufelrads;
- Fig. 2: schematisch ein doppelreihiges Schaufelrad entsprechend der Figur 1 in Schnittdarstellung;
- Fig. 3A: schematisch eine Draufsicht in axialer Richtung auf eine als Vollring ausgebildete erste Gitterreihe;
- Fig. 3B: die erste Gitterreihe der Fig. 3A sowie Segmente einer zweiten Gitterreihe, die sukzessive vor der ersten Gitterreihe angeordnet und positioniert werden;
- Fig. 4: zwei Schaufeln einer ersten Gitterreihe und zwei Schaufeln einer zweiten Gitterreihe eines doppelreihigen Schaufelrades;
- Fig. 5: schematisch mögliche Positionen des Versatzes im Umfangsrichtung einer Schaufel der einen Gitterreihe und einer Schaufel der anderen Gitterreihe eines doppelreihigen Schaufelrads; und
- Fig. 6: ein Diagramm, in dem der normierte Stufenwirkungsgrad in Abhängigkeit vom relativen Abstand in Umfangsrichtung zwischen zwei Schaufeln dargestellt ist, wobei ein Toleranzbereich für die relative Positionierung der Schaufeln der beiden Gitterreihen eines doppelreihigen Schaufelrads erkennbar ist.

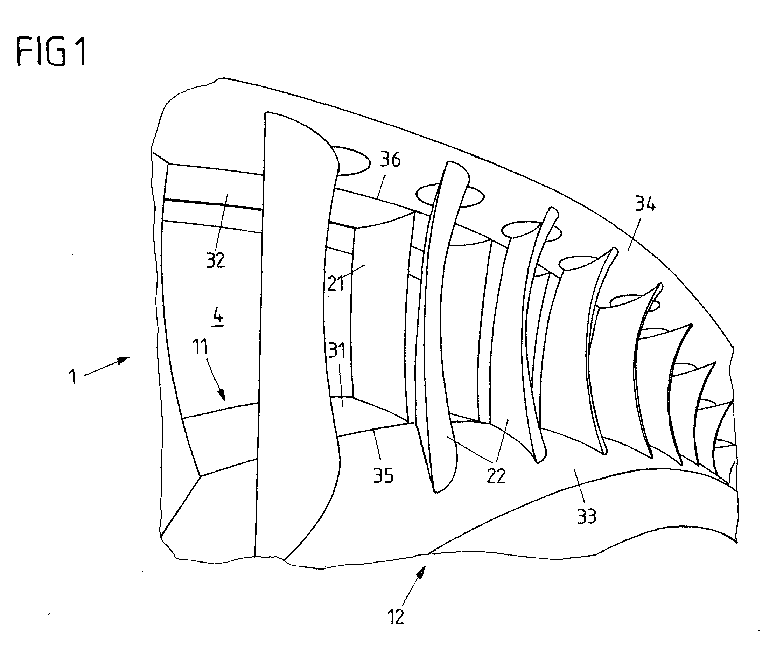

Die Figur 1 zeigt ein doppelreihiges Schaufelrad 1. Es handelt sich beispielsweise um ein doppelreihiges Leitrad oder ein doppelreihiges Austrittsleitrad eines Verdichters eines Strahltriebwerks. Grundsätzlich kann ein entsprechend ausgebildetes Schaufelrad in beliebigen Strömungsmaschinen wie insbesondere Bläsern, Verdichtern, Turbinen, Pumpen und Ventilatoren eingesetzt werden.

Das doppelreihige Schaufelrad 1 umfasst eine erste Gitterreihe 11 und eine zweite Gitterreihe 12. Die erste Gitterreihe 11 weist eine Mehrzahl erster Leitschaufeln 21 auf, die an einem ringförmigen Träger angeordnet sind, der ein Innendeckband 31 und ein Außendeckband 32 umfasst. Das Innendeckband 21 und das Außendeckband 32 sind jeweils ringförmig ausgebildet.

In entsprechender Weise weist die zweite Gitterreihe 12 eine Mehrzahl zweiter Leitschaufeln 22 auf, die in einem Träger angeordnet sind, der aus einem Innendeckband 33 und einem Außendeckband 34 besteht. Das Innendeckband 33 und das Außendeckband 34 sind ebenfalls ringförmig ausgebildet.

Die Innendeckbänder 31, 33 und die Außendeckbänder 32, 34 definieren die radial inneren und die radial äußeren Begrenzungen eines kreisringförmigen Hauptströmungspfades 4, in dem sich die ersten Schaufeln 21 und die zweiten Schaufeln 22 befinden.

Jeweils zwei in Strömungsrichtung hintereinander angeordnete Leitschaufeln 21, 22 bilden eine Tandemschaufel des doppelreihigen Schaufelrads. Dabei weisen beide Gitterreihen 11, 12 die gleiche Anzahl von Schaufeln 21, 22 auf, so dass jeweils zwei Schaufeln 11, 12 einander zugeordnet sind.

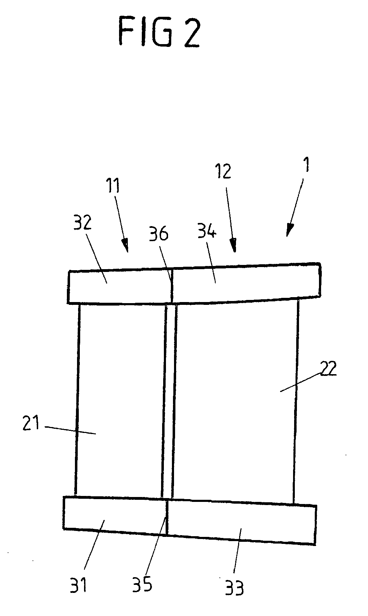

Die Figur 2 zeigt schematisch ein doppelreihiges Schaufelrad 1 gemäß der Figur 1 in axialer Schnittansicht. Dabei sind die erste und zweite Gitterreihe 11, 12, erste und zweite Laufschaufeln 21, 22 und die Innen- und Außendeckbänder 31, 33, 32, 34 dargestellt. Die erste Gitterreihe 11 und die zweite Gitterreihe 12 sind im Bereich der Deckbänder 31, 33 und 32, 34 an Verbindungsflächen 35, 36 miteinander verbunden. An den Verbindungsflächen 35, 36 sind die Deckbänder 31, 33 und 32, 34 beispielsweise miteinander verschweißt oder verschraubt.

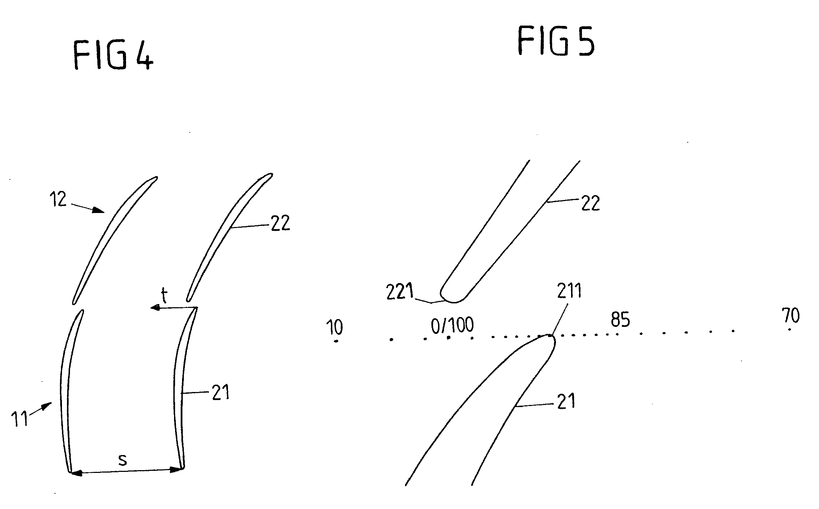

Zwei Schaufeln 21, 22 einer Tandemschaufel sind in Umfangsrichtung relativ zueinander versetzt angeordnet, das heißt, die Vorderkante der hinteren Schaufel 22 grenzt in axialer Richtung nicht an die Hinterkante der vorderen Schaufel 21 an (es sei denn ein Versatz von Null ist vorgesehen). Dies ist in den Figuren 4 und 5 verdeutlicht. Der Versatz in Umfangsrichtung zwischen zwei Schaufeln 21, 22 ist dabei in der Figur 4 mit t bezeichnet, während der Abstand zwischen den Vorderkanten zweier Schaufeln 21 der vorderen Schaufelreihe 11 mit s angegeben ist.

Die Figur 5 verdeutlicht, dass eine Vielzahl von Relativpositionen zwischen den beiden Schaufeln 21, 22 einer Tandemschaufel möglich sind, die jeweils einem unterschiedlichen Versatz der beiden Schaufeln 21, 22 in Umfangsrichtung entsprechen. Wenn die Hinterkante 211 der vorderen Schaufel 21 sich beispielsweise an der Position "0/100" befindet, befinden sich die Hinterkante 211 der vorderen Schaufel 21 und die Vorderkante 221 der hinteren Schaufel 22 in axialer Richtung unmittelbar hintereinander. Der Versatz in Umfangsrichtung t ist in der Figur 5 derart dargestellt, dass er ausgehend von dem Versatz "0/100" prozentual bezogen auf den maximalen Versatz s in beiden Richtungen angegeben ist.

Der realisierte Versatz in Umfangsrichtung, auch als "Clocking" bezeichnet, beeinflusst die Strömungseigenschaften der Tandemschaufel bzw. des doppelreihigen Schaufelrads 1. Je nach Clocking-Position, also Relativposition der beiden Schaufeln 21, 22 zueinander, kann eine Wirkungsgradänderung auftreten. Es ist daher anzustreben, eine Clocking-Position, die den besten Wirkungsgrad bereitstellt, mit hoher Genauigkeit einzustellen. In der Figur 5 sind verschiedene solcher Clocking-Positionen zwischen den beiden Schaufeln 21, 22 eingezeichnet.

Um einen möglichst idealen Versatz in Umfangsrichtung zwischen den Schaufeln 21 der einen Gitterreihe 11 und den Schaufeln 22 der anderen Gitterreihe 12 bereitzustellen, und um die Herstellung des doppelreihigen Schaufelrades 1 zu vereinfachen, werden die beiden Gitterreihen 11, 12 des doppelreihigen Schaufelrades 1 der Figur 1 unabhängig voneinander hergestellt. Nach dem unabhängigen Herstellen werden die beiden Gitterreihen 11, 12 miteinander verbunden. Dabei werden vor einer solchen Verbindung die beiden Gitterreihen 11, 12, die beide rotationssymmetrisch sind, in Umfangsrichtung zueinander verdreht, bis eine gewünschte Clocking-Position zwischen den jeweiligen Schaufeln 21, 22 vorliegt und ein Wirkungsgradoptimum erreicht wird.

In der gewünschten Position werden die beiden Gitterreihen 11, 12 dann miteinander verbunden, beispielsweise durch Verschweißen der jeweiligen Deckbänder 31, 33 und 32, 34, wobei eine sichtbare Grenzlinie (an den Enden der Verbindungsflächen 35, 36) zwischen den jeweiligen Deckbändern 31, 33 und 32, 24 verbleibt (siehe Figuren 1, 2).

Gemäß einer Ausgestaltung der Erfindung sind die ringförmigen Träger bzw. Deckbänder 31, 32 der ersten Gitterreihe 11 und die ringförmigen Träger bzw. Deckbänder 33, 34 der zweiten Gitterreihe 12 jeweils als Vollring ausgebildet. Zum Verbinden der beiden Gitterreihen 11, 12 werden die beiden Vollringe entlang ihren sich in axialer Richtung gegenüberliegenden Stirnflächen miteinander verbunden, beispielsweise verschweißt, wobei Verbindungsflächen 35, 36 entsprechend der Figur 2 entstehen.

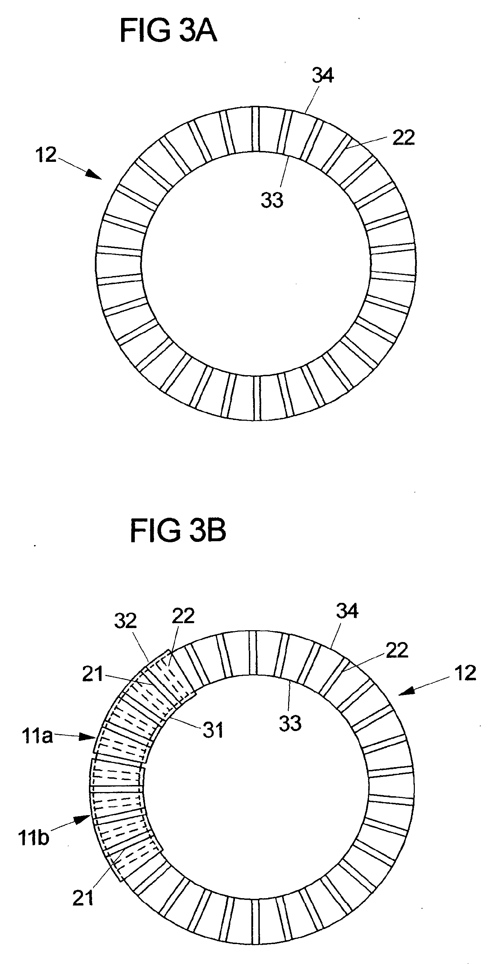

Es kann jedoch ebenfalls vorgesehen sein, dass mindestens einer der beiden Träger nicht als Vollring ausgebildet ist, sondern aus einer Mehrzahl von Kreissegmenten besteht. Die Figuren 3A, 3B zeigen ein Ausführungsbeispiel, bei dem einer der beiden Träger als Vollring und der andere der beiden Träger durch Kreissegmente gebildet ist.

So ist in der Figur 3A zunächst die hintere Gitterreihe 12 dargestellt, die wie in Bezug auf Figur 1 erläutert ein Innendeckband 33, ein Außendeckband 34 und eine Mehrzahl von Leitschaufeln 22 umfasst. Die Darstellung der Figur 3A ist dabei schematisch. Vor die Gitterreihe 12 wird die unabhängig davon hergestellte Gitterreihe 11 montiert, die aus einer Mehrzahl von Kreissegmenten besteht, von denen in der Figur 3B zwei Kreissegmente 11 a, 11 b dargestellt sind.

Es wird nun nacheinander jeweils ein Kreissegment 11a mit dem Vollring, den die hintere Gitterreihe 12 bildet, verbunden. Da das jeweilige Segment 11 a, 11b eine vergleichsweise geringe Anzahl von Schaufeln 21 aufweist, kann dabei die Clocking-Position hochgenau eingestellt werden. Diese Einstellung erfolgt für jedes Kreissegment 11a, 11 b gesondert, bevor dieses dann mit der hinteren Gitterreihe 12 verbunden wird. Durch Aufteilung der vorderen Gitterreihe 11 in Segmente 11a, 11b kann somit eine kostengünstige Herstellung unter Bereitstellung der gewünschten Clocking-Position mit hoher Genauigkeit erreicht werden. Je kleiner dabei die einzelnen Segmente 11 a, 11 b sind, desto genauer ist die gewünschte Clocking-Position einstellbar.

Der beschriebene Aufbau des doppelreihigen Schaufelrades 1 aus zwei unabhängig voneinander hergestellten Gitterreihen oder Segmenten von Gitterreihen ermöglicht aufgrund der Einstellbarkeit der Relativposition zwischen den Schaufeln der jeweiligen Gitterreihen durch Verdrehen einen Ausgleich der naturgemäß vorhandenen Toleranzen im Hinblick auf die Position der einzelnen Schaufeln in der jeweiligen Gitterreihe in Umfangsposition.

Die beiden Gitterreihen 11, 12 bzw. deren Segmente 11 a, 11 b sind beispielsweise durch Metallgießen oder durch Metall-Spritzgießen hergestellt. Dabei kann vorgesehen sein, dass die Schaufeln 21, 22 zusammen mit jeweils mindestens einem der Deckbänder 31, 32, 33, 34 gemeinsam durch Metallgießen oder Metall-Spritzgießen hergestellt sind. Alternativ kann vorgesehen sein, dass die Schaufeln nachträglich mit den Deckbändern oder mit an die Deckbänder angrenzenden Strukturen von Gehäuse und/oder Nabe verbunden werden.

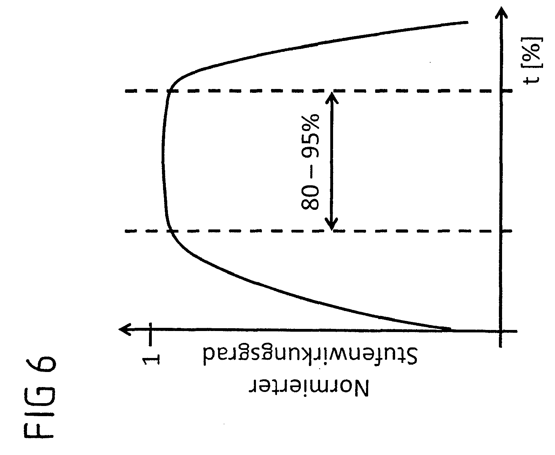

Die Figur 6 greift die in der Figur 5 dargestellte relative Positionierung zwischen zwei Schaufeln 21, 22 einer Tandemschaufel auf. Auf der Abszissenachse ist t in Prozent aufgetragen, wobei t wie in Bezug auf die Figur 4 erläutert den relativen Abstand in Umfangsrichtung zwischen zwei Schaufeln 21, 22 angibt. Der Wert von 100 % bezeichnet dabei die Situation, dass die beiden Schaufeln einer Tandemschaufel direkt hintereinander stehen, das heißt, die Hinterkante 211 der vorderen Schaufel 21 und die Vorderkante 221 der hinteren Schaufel 21 axial exakt hintereinander stehen, vgl. Figur 5. Auf der Abszissenachse ist der normierte Wirkungsgrad der Stufe angegeben.

Die Kurve der Figur 6 zeigt, dass bei Werten von t zwischen etwa 80 % und 95 % ein relativ großer Toleranzbereich der Positionierung vorliegt. Innerhalb dieses Toleranzbereiches kann die Clocking-Position variieren, d. h. geringfügige Toleranzen der Clocking-Position innerhalb des Toleranzbereiches sind unschädlich. Aufgrund dieses Umstandes wird der Wirkungsgrad nicht beeinträchtigt, wenn trotz der hochgenauen relativen Positionierung der jeweiligen Schaufeln 11, 12 zueinander-erreicht durch das beschriebene Herstellungsverfahren - noch geringe Toleranzen verbleiben.

Die Erfindung beschränkt sich in ihrer Ausgestaltung nicht auf die vorstehend dargestellten Ausführungsbeispiele, die lediglich beispielhaft zu verstehen sind. Insbesondere können die Art der Ausbildung der Gitterreihen und die Ausgestaltung der Schaufeln von den dargestellten Ausführungsbeispielen abweichen.

## Patentansprüche

1. Verfahren zur Herstellung eines doppelreihigen Schaufelrads (1) für eine Strömungsmaschine, das eine erste Gitterreihe (11) mit einer Mehrzahl erster Schaufeln (21) und eine zweite Gitterreihe (12) mit einer Mehrzahl zweiter Schaufeln (22) umfasst, wobei das Verfahren die Schritte umfasst:
- Herstellen der ersten Gitterreihe (11) oder von Segmenten (11a, 11 b) der ersten Gitterreihe,
- unabhängig davon Herstellen der zweiten Gitterreihe (12) oder von Segmenten der zweiten Gitterreihe,
- nach dem jeweiligen Herstellen Verbinden der ersten Gitterreihe (11) mit der zweiten Gitterreihe (12) oder Verbinden von Segmenten (11a, 11b) der ersten Gitterreihe (11) und/oder der zweiten Gitterreihe untereinander oder mit einer der Gitterreihen (12),
- wobei das Herstellen der ersten Gitterreihe (11) das Herstellen eines ringförmigen Trägers (31, 32) umfasst, an dem eine Mehrzahl der ersten Schaufeln (21) angeordnet ist, und das Herstellen der zweiten Gitterreihe (12) das Herstellen eines zweiten ringförmigen Trägers (33, 34) umfasst, an dem eine Mehrzahl der zweiten Schaufeln (22) angeordnet ist,
- und wobei der erste ringförmige Träger (11) und/oder der zweite ringförmige Träger nicht als Vollring, sondern aus einer Mehrzahl von Kreissegmenten (11 a, 11 b) gebildet werden.

2. Verfahren nach Anspruch 1, **dadurch gekennzeichnet, dass** das Verbinden der Gitterreihen (11, 12) und/oder der Segmente (11 a, 11 b) der Gitterreihen (11, 12) in einer Position erfolgt, bei der eine gewünschte Relativposition in Umfangsrichtung zwischen den ersten Schaufeln (21) und den zweiten Schaufeln (22) vorliegt.

3. Verfahren nach Anspruch 1 oder 2, **dadurch gekennzeichnet, dass** einer der beiden Träger (12) als Vollring und der andere der beiden Träger (11) durch Kreissegmente (11a, 11 b) gebildet wird, wobei die Kreissegmente (11 a, 11 b) sukzessive mit dem Vollring verbunden werden.

4. Verfahren nach Anspruch 3, **dadurch gekennzeichnet, dass** ein erstes Kreissegment (11a) mit dem Vollring verbunden wird, wobei eine gewünschte Relativposition in Umfangsrichtung zwischen Schaufeln (21) des ersten Kreissegments (11a) und Schaufeln (22) des Vollrings eingestellt wird, und anschließend mindestens ein weiteres Kreissegment (11b) mit dem Vollring verbunden wird, ebenfalls unter Einstellung einer gewünschten Relativposition in Umfangsrichtung zwischen den Schaufeln (21) des Kreissegments (11b) und Schaufeln (22) des Vollrings.

5. Verfahren nach einem der vorangehenden Ansprüche, **dadurch gekennzeichnet, dass** das Verbinden der Gitterreihen (11, 12) und/oder der Segmente (11a, 11b) der Gitterreihen (11, 12) in einer Position erfolgt, in der der relative Abstand (t) in Umfangsrichtung zwischen den Schaufeln (21) der ersten Gitterreihe (11) und den jeweils benachbarten Schaufeln (22) der zweiten Gitterreihe (12) derart bemessen ist, dass er in einem Toleranzbereich der Positionierung liegt, der bei Werten des relativen Abstands (t) zwischen etwa 80 % und 95 % liegt.

6. Verfahren nach einem der vorangehenden Ansprüche, **dadurch gekennzeichnet, dass** die erste Gitterreihe (11) und/oder die zweite Gitterreihe (12) und/oder Segmente (11a, 11 b) derselben durch ein Metallgussverfahren oder ein Metall-Spritzgussverfahren hergestellt werden.

7. Doppelreihiges Schaufelrad (1) für eine Strömungsmaschine, das aufweist:
- eine erste Gitterreihe (11), die eine Mehrzahl erster Schaufeln (21) umfasst, und
- eine zweite Gitterreihe (12), die eine Mehrzahl zweiter Schaufeln (22) umfasst, wobei die erste und die zweite Gitterreihe (11, 12) in Strömungsrichtung eines Gases, das die Gitterreihen (11, 12) durchströmt, aneinander angrenzend angeordnet sind, **dadurch gekennzeichnet, dass**
- die erste Gitterreihe (11) und die zweite Gitterreihe (12) unabhängig voneinander hergestellt worden sind und/oder unabhängig voneinander hergestellte Segmente (11 a, 11 b) umfassen, wobei die erste Gitterreihe (11) und die zweite Gitterreihe (12) miteinander oder Segmente (11 a, 11 b) der ersten Gitterreihe (11) und/oder Segmente der zweiten Gitterreihe untereinander oder mit einer der Gitterreihen (12) verbunden sind,
- die erste Gitterreihe (11) einen ersten ringförmigen Träger (31, 32) aufweist, an dem eine Mehrzahl der ersten Schaufeln (21) angeordnet ist, und die zweite Gitterreihe (12) einen zweiten ringförmigen Träger (33, 34) aufweist, an dem die Mehrzahl der zweiten Schaufeln (22) angeordnet ist, und
- einer der beiden Träger (12) als Vollring und der andere der beiden Träger (11) durch Kreissegmente (11a, 11 b) gebildet ist, wobei die Kreissegmente (11a, 11 b) jeweils mit dem Vollring verbunden sind.

8. Schaufelrad nach Anspruch 7, **dadurch gekennzeichnet, dass** die erste Gitterreihe (11) und/oder die zweite Gitterreihe (12) und/oder die Segmente (11a, 11 b) derselben durch ein Metallgussverfahren oder ein Metall-Spritzgussverfahren hergestellt sind.

9. Schaufelrad nach Anspruch 7 oder 8, **dadurch gekennzeichnet, dass** das doppelreihige Schaufelrad (1) ein Leitrad, insbesondere ein Ausgangsleitrad eines Verdichters ist.

## Claims

1. Method for the manufacture of a double-row blade wheel (1) for a fluid-flow machine that includes a first grid row (11) with a plurality of first blades (21) and a second grid row (12) with a plurality of second blades (22), the method including the following steps:
- manufacturing the first grid row (11) or segments (11a, 11b) of the first grid row,
- independently thereof, manufacturing the second grid row (12) or segments of the second grid row,
- after the respective manufacture, connecting the first grid row (11) to the second grid row (12) or connecting segments (11a, 11b) of the first grid row (11) and/ or of the second grid row to one another or to one of the grid rows (12),
- where the manufacture of the first grid row (11) includes the manufacture of an annular support (31, 32) on which a plurality of the first blades (21) is arranged, and the manufacture of the second grid row (12) includes the manufacture of a second annular support (33, 34) on which a plurality of the second blades (22) is arranged,
- and where the first annular support (11) and/ or the second annular support is (are) formed not as a complete ring, but from a plurality of circular segments (11a, 11 b).

2. Method in accordance with Claim 1, **characterized in that** the grid rows (11, 12) and/ or the segments (11 a, 11 b) of the grid rows (11, 12) are connected in a position in which a required relative position is achieved in the circumferential direction between the first blades (21) and the second blades (22).

3. Method in accordance with Claim 1 or 2, **characterized in that** one of the two supports (12) is formed as a complete ring and the other one of the two supports (11) is formed by circular segments (11 a, 11 b), with the circular segments (11a, 11 b) being successively connected to the complete ring.

4. Method in accordance with Claim 3, **characterized in that** a first circular segment (11 a) is connected to the complete ring, with a required relative position being set in the circumferential direction between blades (21) of the first circular segment (11 a) and blades (22) of the complete ring, and that at least one further circular segment (11 b) is then connected to the complete ring, also with the setting of a required relative position in the circumferential direction between the blades (21) of the circular segment (11 b) and the blades (22) of the complete ring.

5. Method in accordance with one of the preceding Claims, **characterized in that** the grid rows (11, 12) and/ or the segments (11 a, 11b) of the grid rows (11, 12) are connected in a position in which the relative distance (t) in the circumferential direction between the blades (21) of the first grid row (11) and the respectively adjacent blades (22) of the second grid row (12) is dimensioned such that it is within a tolerance range for positioning which is between about 80 % and 95 % for values of the relative distance (t).

6. Method in accordance with one of the preceding Claims, **characterized in that** the first grid row (11) and/ or the second grid row (12) and/ or segments (11 a, 11 b) of said grid rows are manufactured by a metal casting process or a metal injection moulding process.

7. Double-row blade wheel (1) for a fluid-flow machine, having:
- a first grid row (11) that includes a plurality of first blades (21), and
- a second grid row (12) that includes a plurality of second blades (22), where the first and the second grid rows (11, 12) are arranged adjoining one another in the flow direction of a gas flowing through the grid rows (11, 12), **characterized in that**
- the first grid row (11) and the second grid row (12) have been manufactured independently of one another and/ or include segments (11a, 11 b) manufactured independently of one another, where the first grid row (11) and the second grid row (12) are connected to one another, or segments (11a, 11b) of the first grid row (11) and/ or segments of the second grid row are connected to one another or to one of the grid rows (12),
- the first grid row (11) is provided with a first annular support (31, 32) on which a plurality of the first blades (21) is arranged, and the second grid row (12) is provided with a second annular support (33, 34) on which the plurality of the second blades (22) is arranged, and that
- one of the two supports (12) is formed as a complete ring and the other one of the two supports (11) is formed by circular segments (11a, 11b), with the circular segments (11a, 11b) each being connected to the complete ring.

8. Blade wheel in accordance with Claim 7, **characterized in that** the first grid row (11) and/ or the second grid row (12) and/ or the segments (11 a, 11 b) of said grid rows are manufactured by a metal casting process or a metal injection moulding process.

9. Blade wheel in accordance with Claim 7 or 8, **characterized in that** the double-row blade wheel (1) is a guide vane assembly, in particular an outlet guide vane of a compressor.

## Revendications

1. Procédé de fabrication d'une roue à aubes (1) à deux rangées pour une machine à écoulement, ladite roue à aubes comprenant une première rangée de grilles (11) avec une pluralité de premières aubes (21) et une seconde rangée de grilles (12) avec une pluralité de secondes aubes (22), ledit procédé comprenant les étapes suivantes :
- fabrication de la première rangée de grilles (11) ou de segments (11a, 11 b) de la première rangée de grilles,
- indépendamment de cela, fabrication de la seconde rangée de grilles (12) ou de segments de la seconde rangée de grilles,
- après les fabrications respectives, jonction de la première rangée de grilles (11) avec la seconde rangée de grilles (12) ou jonction de segments (11a, 11 b) de la première rangée de grilles (11) et/ou de la seconde rangée de grilles entre eux ou avec l'une des rangées de grilles (12),
- sachant que la fabrication de la première rangée de grilles (11) comprend la fabrication d'un support (31, 32) annulaire sur lequel est disposée une pluralité des premières aubes (21), et que la fabrication de la seconde rangée de grilles (12) comprend la fabrication d'un second support (33, 34) annulaire sur lequel est disposée une pluralité des secondes aubes (22),
- et que le premier support (11) annulaire et/ ou le second support annulaire ne sont (n'est) pas formé(s) en tant qu'anneau monobloc, mais d'une pluralité de segments de cercle (11a, 11 b).

2. Procédé selon la revendication n° 1, **caractérisé en ce que** la jonction des rangées de grilles (11, 12) et/ ou des segments (11a, 11b) des rangées de grilles (11, 12) est effectuée dans une position pour laquelle est établie une position relative souhaitée dans le sens circonférentiel entre les premières aubes (21) et les secondes aubes (22).

3. Procédé selon la revendication n° 1 ou n° 2, **caractérisé en ce que** l'un des deux supports (12) est formé en tant qu'anneau monobloc et l'autre des deux supports (11) par des segments de cercle (11 a, 11 b), les segments de cercle (11 a, 11 b) étant successivement assemblés avec l'anneau monobloc.

4. Procédé selon la revendication n° 3, **caractérisé en ce qu'**un premier segment de cercle (11a) est assemblé avec l'anneau monobloc, sachant qu'une position relative souhaitée dans le sens circonférentiel est établie entre des aubes (21) du premier segment de cercle (11a) et des aubes (22) de l'anneau monobloc, et qu'ensuite au moins un autre segment de cercle (11 b) est assemblé avec l'anneau monobloc, également en établissant une position relative souhaitée dans le sens circonférentiel entre les aubes (21) du segment de cercle (11 b) et les aubes (22) de l'anneau monobloc.

5. Procédé selon une des revendications précédentes, **caractérisé en ce que** la jonction des rangées de grilles (11, 12) et/ ou des segments (11a, 11b) des rangées de grilles (11, 12) est effectuée dans une position dans laquelle la distance relative (t) dans le sens circonférentiel entre les aubes (21) de la première rangée de grilles (11) et les aubes (22) respectivement voisines de la seconde rangée de grilles (12) est dimensionnée de sorte qu'elle se situe dans une plage de tolérance du positionnement se situant entre environ 80 % et 95 % pour des valeurs de la distance relative (t).

6. Procédé selon une des revendications précédentes, **caractérisé en ce que** la première rangée de grilles (11) et/ ou la seconde rangée de grilles (12) et/ ou des segments (11 a, 11 b) desdites rangées sont fabriqués par un procédé de coulage de métal ou un procédé de moulage par injection de métal.

7. Roue à aubes (1) à deux rangées pour une machine à écoulement, comprenant :
- une première rangée de grilles (11) qui comprend une pluralité de premières aubes (21), et
- une seconde rangée de grilles (12) qui comprend une pluralité de secondes aubes (22), sachant que la première et la seconde rangées de grilles (11, 12) sont disposées en se jouxtant dans le sens d'écoulement d'un gaz qui traverse les rangées de grilles (11, 12), **caractérisée en ce que**
- la première rangée de grilles (11) et la seconde rangée de grilles (12) ont été fabriquées indépendamment l'une de l'autre et/ ou comprennent des segments (11 a, 11 b) fabriqués indépendamment les uns des autres, sachant que la première rangée de grilles (11) et la seconde rangée de grilles (12) sont assemblées entre elles ou que des segments (11 a, 11 b) de la première rangée de grilles (11) et/ ou des segments de la seconde rangée de grilles sont assemblés entre eux ou avec l'une des rangées de grilles (12),
- la première rangée de grilles (11) présente un premier support (31, 32) annulaire, sur lequel est disposée une pluralité des premières aubes (21), et que la seconde rangée de grilles (12) présente un second support (33, 34) annulaire, sur lequel est disposée la pluralité des secondes aubes (22), et que
- l'un des deux supports (12) est formé en tant qu'anneau monobloc et l'autre des deux supports (11) par des segments de cercle (11 a, 11 b), les segments de cercle (11 a, 11 b) étant respectivement assemblés avec l'anneau monobloc.

8. Roue à aubes selon la revendication n° 7, **caractérisée en ce que** la première rangée de grilles (11) et/ ou la seconde rangée de grilles (12) et/ ou les segments (11a, 11b) desdites rangées sont fabriqués par un procédé de coulage de métal ou un procédé de moulage par injection de métal.

9. Roue à aubes selon la revendication n° 7 ou n° 8, **caractérisée en ce que** la roue à aubes (1) à deux rangées est un assemblage d'aubes directrices, en particulier une aube directrice de sortie d'un compresseur.
